# EUROPEAN PATENT APPLICATION

(11) **EP 2 080 698 A1**
(43) Date of publication of application: **22.07.2009**
(21) Application number: 09150795.4
(22) Date of filing: 16.01.2009
(51) Int. Cl.: B62J 7/04

(54) **Luggage carrier for cycles**

(30) Priority: 18.01.2008 GB 0800945
(71) Applicant: Zyro Limited, Thirsk North Yorkshire YO7 3BX (GB)
(72) Inventor: Bennison, Andrew, Thirsk, North Yorkshire YO7 3BX (GB)
(74) Representative: Harrison Goddard Foote

(57) **Abstract**

A carrying rack (12) for mounting on a bicycle comprises an upper support portion (14) for mounting luggage, goods or the like, a first side supporting limb (26) having an upper end and a lower end, the lower end being configured to be attached in use to a mounting location at a lower part of the bicycle frame; and first and second co-operating formations attached respectively to the upper support portion and the second side supporting limb (24), the said co-operating portions being relatively moveable thereby to adjust the distance between a side margin of the upper support portion (14) and the first side supporting limb (26).

## Description

The present invention relates to carrying racks for cycles, in particular to carrying racks arranged to be mounted over the rear wheel of a cycle. More especially, the present invention relates to carrying racks arranged to be mounted over the rear wheel of a pedal cycle.

Carrying racks for cycles are well known and are described, for example, in GB1572958, EP0581692, NL9301007, NL9400404, NL1002738, NL1009804, DE29911818U1, US4429818, US4477004, US4537338, US5090717, and US5411190. Typically, the carrying rack comprises a frame portion which is arranged nominally horizontally in use, a forward fixing portion which is attached directly or indirectly to the seat post or seat post tube of the cycle and respective side supporting limbs which are attached at or adjacent the rear axle of the bicycle. Adjustment means may be provided to accommodate different sizes of seat post, seat post tube or associated fixings and to ensure that the frame portion is substantially horizontal in use.

Conventionally the lateral spacing of the rear portion of the bicycle frame to which the rear wheel is attached is substantially invariant between different cycles. In other words, the distance between the rear forks along the rotational axis of the wheel is at least nominally the same on different cycles. Therefore, cycle carrying racks can be made to standard dimension which comply with this width. Where there is some difference in this width, it is not unusual for a user to attempt to bend one or more of the side supporting limbs to accommodate this difference. This can, of course, compromise the structural strength of the carrying rack.

Problems have now arisen in that increasingly complex gear arrangements mean that the distance between the points on the rear forks of the bicycle frame to which the side supporting limbs of the carrying rack are mounted is no longer constant between different cycles. Furthermore, it is increasingly common for cycles (in particular those used off road) to be provided with disc brakes. The disc brake calliper extends laterally beyond the rear forks of the cycle frame and this increase in width must also be accommodated by the side support limbs of the cycle carrying rack.

The present invention seeks to overcome, or at least alleviate, the above disclosed problems.

According to the present invention there is provided a carrying rack for mounting on a bicycle comprising
an upper support portion for mounting luggage, goods or the like,
a first side supporting limb having an upper end and a lower end, the lower end being configured to be attached in use to a mounting location at a lower part of the bicycle frame; and
first and second co-operating formations attached respectively to the upper support portion and the second side supporting limb, the said co-operating portions being relatively moveable thereby to adjust the distance between a side margin of the upper support portion and the second side supporting limb.

In a first preferred embodiment the carrying rack further comprises an upper fixing arrangement configured for attachment directly or indirectly to an upper portion of the bicycle frame.

In another preferred embodiment the carrying rack further comprises a second side supporting limb having an upper end and a lower end, the upper end being attached to the upper support portion and the lower end being configured to be attached in use to a mounting location at a lower part of the bicycle frame.

In a further preferred embodiment the first co-operating formation comprises a laterally extending member extending from an upper part of the first side support limb and wherein the second co-operating formation comprises a receiving body mounted in fixed relation to the upper support portion and configured to receive said laterally extending member. Preferably in this embodiment the co-operating formations comprise a plurality of laterally extending members and an equal number of receiving bodies, each body receiving a respective laterally extending member.

Preferably the carrying rack further comprises means for urging the receiving body into fixed or locking engagement with the laterally extending member, thereby to prevent unintended removal of the laterally extending member from the receiving body.

For a better understanding of the invention and to show how the same may be carried into effect, reference will now be made by way of example only to the following drawings in which:
Figure 1 is a perspective view of a bicycle carrying rack according to the invention;
Figure 2 is a view similar to Figure 1 showing the bicycle carrying rack in an expanded configuration;
Figure 3 shows the detail of a fixing arrangement for the bicycle carrying rack of Figures 1 and 2;
Figure 4 is an enlarged view of a gripping member which forms a part of the bicycle carrying rack of the invention;
Figure 5 is a lateral cross section through the gripping member of Figure 4; and
Figure 6 shows schematically the application of a disc brake to a bicycle frame.

The bicycle carrying rack as illustrated is typically made form shaped or formed metal rods or tubes and includes an upper frame portion 14. The frame portion 14 in the illustrated embodiments comprises longitudinal side members 14a and 14b and lateral side members 14c and 14d which together form a substantially rectangular unit. At least one cross brace 14e may be provided between longitudinal side members 14a and 14b, but is not essential. The frame provides a supporting body on which bags, equipment, child seats or the like can be mounted. Towards its front portion the frame 14 includes a lateral mounting plate 18 which extends between the longitudinal side members 14a and 14b. Attachment means 16 are adjustably attached to the lateral mount 18 by means of adjustable fixings 20 which allow a user to select the lateral position of the attachment means 16. Attachment means 16 are configured for attachment at ends 16a directly or indirectly to the seat post or seat post tube of the bicycle or, more conveniently, to the seat stays of the bicycle frame. In one example, the seat post tube may be provided with a suitable collar to which the ends 16a may be fastened by suitable means such as a nut and bolt. Collars of this type are well known in the art and are not described further herein.

A mounting plate 22 may conveniently be attached to the rear lateral side member 14c for mounting lights, reflectors or the like.

The carrying rack 12 further comprises first and second side support limbs 26 and 24. Second side support limb 24 comprises limb elements 24a and 24b which together adopt a V-shaped configuration and a limb element 24c which, approximately, bisects the elements 24a and 24b. Elements 24a, 24b and 24c are fixedly attached to the frame 14 at the side defined by longitudinal side member 14a.

First side support limb 26 similarly comprises first and second limb elements 26a and 26b which are arranged in a V-shaped configuration and a third element 26c which, approximately, bisects the elements 26a and 26b. However, first side support limb 26 is not fixedly attached to frame 14. Both first and second side support limbs 24 and 26 include respective cross brace members 28 which can conveniently serve as a mounting member for pannier bags and the like.

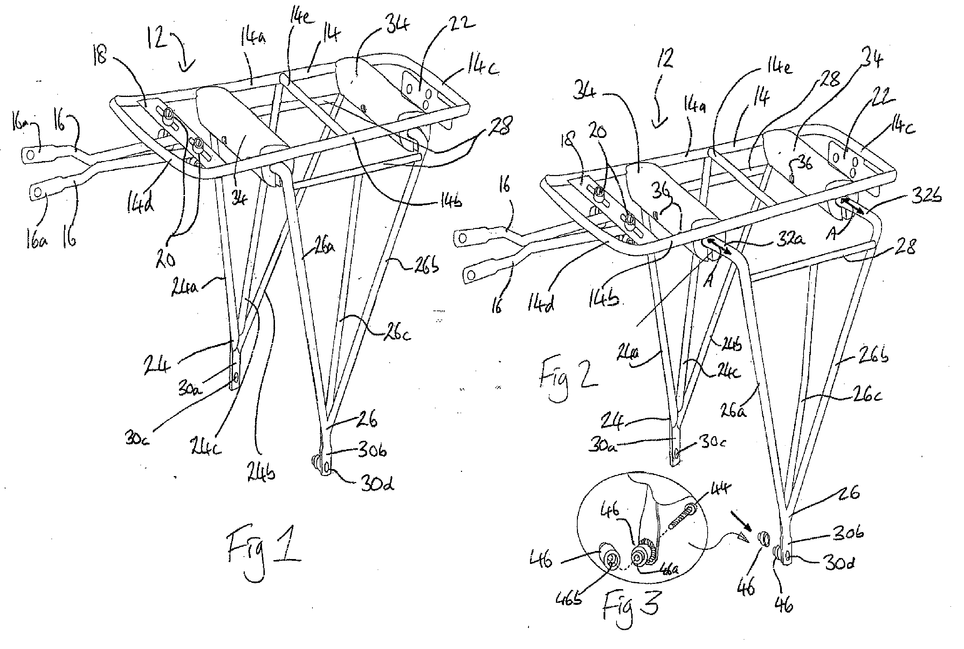

The first and second side support limbs 26, 24 terminate at their lower ends in respective flattened plate portions 30a, 30b which define respective through bores 30c, 30d. The plate portions 30a, 30b and bores 30c, 30d are configured for attachment of the carrying rack 12 to the bicycle frame in the region of the bicycle rear axle. Conveniently the bicycle frame is provided with suitable fixing locations such as complementary bores which accept a bolt passing through the bore 30c, 30d of respective plate portion 30a, 30b. A typical bolt is illustrated at 44 in Figure 3.

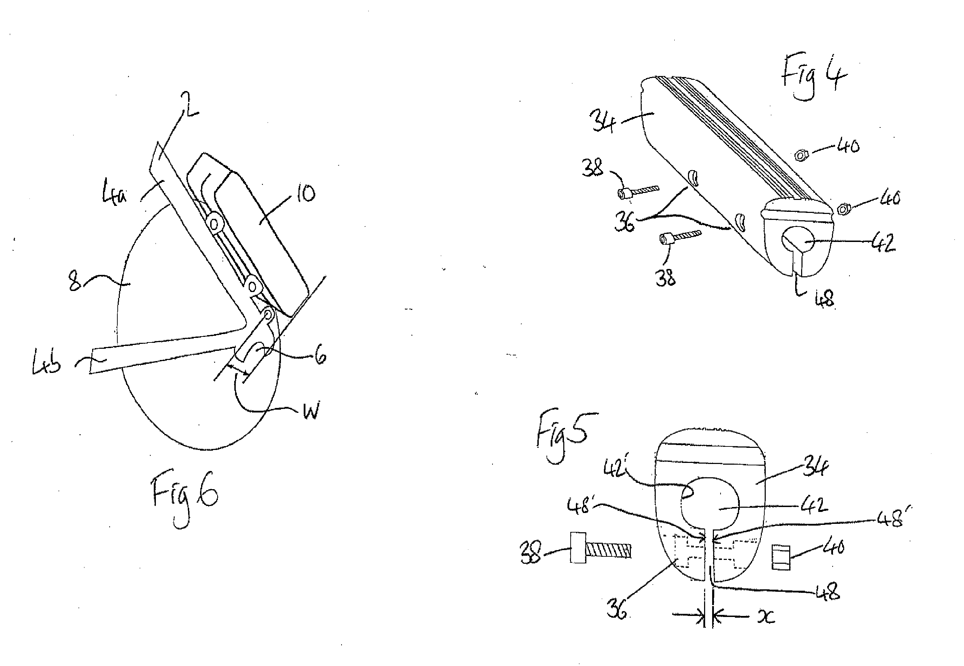

Referring now to Figure 6 which shows schematically a brake disc arrangement for a bicycle, the illustrated bicycle frame includes frame members 4a and 4b which are typically attached to the bicycle seat post tube (not illustrated). The frame members 4a and 4b terminate at, and are joined in, a region which includes means for accommodating the axle bolt of the bicycle rear wheel, as indicated at 6. The bicycle disc brake is indicated at 8 and is in the form of a disc or ring, typically of metal, which during braking is gripped by calliper 10. The width of calliper 10 extends beyond the maximum lateral extent of frame members 4a and 4b as indicated by arrow w. Thus calliper 10 would interfere with the side support of a conventional bicycle carrying rack which would be attached to the bicycle frame in the region generally indicated at 6.

Referring now in particular to Figures 2 and 3, the bicycle carrying rack of the present invention includes an adjustable second side support limb 26. Elements 26a and 26b of the first side support limb 26 includes at their upper ends a respective extension portion 32a, 32b which extends in use nominally parallel to cross member 14e. That is, the extension portions 32a, 32b extend nominally parallel to the axle of the rear wheel when the bike carrying rack is mounted on the bicycle. The extension portions 32a 32b are received in respective bores 42 of clamping members 34 which are mounted in the frame 14. Thus, the extension portions 32a, 32b are moveable in the directions indicated by arrows A into and out of the bores 42 thereby to vary the spacing of the first and second side support limbs 24, 26. The additional width required to accommodate the calliper 10 of the disc brake, or to accommodate more complex gear arrangements, is thereby provided.

The gripping member 34 includes a channel 48 which opens into the bore 42 and is also open to the exterior of the gripping member 34. Thus, the channel is nominally radial with respect to the bore 42. The gripping member 34 further includes one or more lateral bores 36 which intersect the channel 48. The bores 36 are configured to accommodate bolts 38 and captive nuts 40. The nuts 40 and bolts 38 have a complementary thread so that tightening of the bolts 38 into the nuts 40 urges the walls 48' of the channel 48 towards each other. The cross sectional dimension of the bore 42 is also thereby reduced so that the wall 42' of the bores 42 is urged more tightly into engagement with the extension portions 32a, 32b of the second side support limb 26. Thus, by tightening the bolts 36 into the nuts 40 the first side support limb 26 is secured and retained on the frame 14.

In the above described arrangement, when the first side support limb 26 has been set at the desired width to accommodate the brake calliper 10, it will be noted that the lower end 30b remains spaced apart from its corresponding fixing point on the bicycle frame in region 6. Therefore, in preferred embodiments of the invention one or more spacers are provided which are located in use between the bicycle frame and the lower end 30b. Each spacer 46 includes a through bore to accommodate a fastening bolt 44 and, preferably, the spacers are configured to be stackable. That is, each spacer includes an externally extending protrusion 46a which can be received in a correspondingly sized and shaped bore 46b or an adjacent spacer 46.

Throughout the description and claims of this specification, the words "comprise" and "contain" and variations of the words, for example "comprising" and "comprises", means "including but not limited to", and is not intended to (and does not) exclude other moieties, additives, components, integers or steps. The words, bike, bicycle and cycle are used herein interchangeably.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A carrying rack for mounting on a bicycle comprising
an upper support portion for mounting luggage, goods or the like,
a first side supporting limb having an upper end and a lower end, the lower end being configured to be attached in use to a mounting location at a lower part of the bicycle frame; and
first and second co-operating formations attached respectively to the upper support portion and the second side supporting limb, the said co-operating portions being relatively moveable thereby to adjust the distance between a side margin of the upper support portion and the second side supporting limb.

2. A carrying rack as claimed in claim 1 further comprising an upper fixing arrangement configured for attachment directly or indirectly to an upper portion of the bicycle frame.

3. A carrying rack as claimed in claim 1 or 2 further comprising a second side supporting limb having an upper end and a lower end, the upper end being attached to the upper support portion and the lower end being configured to be attached in use to a mounting location at a lower part of the bicycle frame.

4. A carrying rack as claimed in any of claims 1 to 3 wherein the first co-operating formation comprises a laterally extending member extending from an upper part of the first side support limb and wherein the second co-operating formation comprises a receiving body mounted in fixed relation to the upper support portion and configured to receive said laterally extending member.

5. A carrying rack as claimed in claim 4 wherein the co-operating formations comprise a plurality of laterally extending members and an equal number of receiving bodies, each body receiving a respective laterally extending member.

6. A carrying rack as claimed in claim 4 or 5 further comprising means for urging the receiving body into fixed or locking engagement with the laterally extending member, thereby to prevent unintended removal of the laterally extending member from the receiving body.

7. A carrying rack substantially as hereinbefore described with reference to any of Figures 1 to 5.
